(19) Europäisches Patentamt
European Patent Office
Office européen des brevets

(11) **EP 0 461 485 B1**

(12) **EUROPÄISCHE PATENTSCHRIFT**

(45) Veröffentlichungstag und Bekanntmachung des Hinweises auf die Patenterteilung:
**24.09.1997 Patentblatt 1997/39**

(51) Int. Cl.$^6$: **B29C 47/88**, B29C 47/90, B29D 11/00

(21) Anmeldenummer: **91108903.5**

(22) Anmeldetag: **31.05.1991**

(54) **Extrudierte Vollplatte bzw. Folie aus Kunststoff, Verfahren zu ihrer Herstellung und Verwendung**

Extruded solid plate, for example a plastic sheet, method of manufacturing and use thereof

Plaque pleine extrudée, par exemple feuille en matière plastique, son procédé de fabrication et application

(84) Benannte Vertragsstaaten:
**AT BE CH DE DK ES FR GB IT LI NL SE**

(30) Priorität: **09.06.1990 DE 4018531**

(43) Veröffentlichungstag der Anmeldung:
**18.12.1991 Patentblatt 1991/51**

(73) Patentinhaber: **Röhm GmbH**
**64293 Darmstadt (DE)**

(72) Erfinder:
• **Funk, Karl**
  **W-6103 Griesheim (DE)**
• **Gross, Heinz, Dr.-Ing.**
  **W-6101 Rossdorf 1 (DE)**

(56) Entgegenhaltungen:
**DE-A- 2 432 778**      **GB-A- 2 051 663**
**NL-A- 8 602 018**

**Beschreibung**

Die Erfindung betrifft eine extrudierte geglättete Vollplatte bzw. Folie aus thermoplastischem Kunststoff, insbesondere Polycarbonat-Kunststoff, die sich durch eine strengere Dickentoleranz, durch verminderte Rauhtiefe, Wölbung und thermischen Schrumpf sowie Vorzugsweise auch durch verminderte Doppelbrechung des Lichts auszeichnet. Alle diese Eigenschaften spielen bei der Verwendung der extrudierten Platte oder Folie zur Herstellung von optisch lesbaren Datenspeichern eine entscheidende Rolle. Die Erfindung betrifft weiterhin ein Verfahren und eine Vorrichtung zur Herstellung solcher extrudierten Vollplatten bzw. Folien, namentlich in größerer Breite, sowie ihre Verwendung zur Herstellung optischer Datenspeicher.

**Stand der Technik**

Die Forderungen, die an Platten und Folien aus Kunststoff gestellt werden, damit sie sich zur Herstellung von optisch lesbaren Datenspeichern eignen, sind allgemein bekannt; vgl. J. Hennig, "Polymere als Substrate für optische Plattenspeicher", Angew. Makromol. Chemie, Band 145/146 (1986), S.391-409. Nach EP-B 8543 sollen sie keine Fremdteilchen von mehr als 10 Mikrometer Größe enthalten und bei der thermoplastischen Verarbeitung keine Blasen und Lunker bilden und bei der Formung eine möglichst geringe optische Doppelbrechung ergeben.

Nach EP-A 199 824 werden Formmassen aus Polymerbausteinen mit bestimmten Werten der Differenz der positiven und negativen Hauptpolarisierbarkeit verwendet, weil dann Orientierungen der Polymermoleküle in einer daraus geformten Platte oder Folie in stark vermindertem Maße zu optischer Doppelbrechung führen. Daher kann man aus solchen Kunststoffen optische Datenträger mit niedrigen Werten der optischen Doppelbrechung formen, die die Größe sogenannter "Compact Disks" (120 mm) überschreiten. Die Wahl des Kunststoffes ist jedoch drastisch eingeschränkt; die Mehrzahl der verfügbaren technischen Kunststoffe ist ausgeschlossen.

Optische Datenträger in Form von Compact Disks werden weitgehend im Spritzgußverfahren hergestellt. Andere Verfahren, mit denen auch optische Datenträger von größerem Format hergestellt werden können, gehen von Vollplatten oder Folien aus Kunststoff in einer Dicke von 0,1 bis 2 mm aus, die nachträglich mit den Informationszeichen versehen werden. Da die Größe der Informationszeichen im Mikrometerbereich liegt und eine sehr genaue Fokussierung des Lesesystems erfordert, werden an die verwendeten Platten und Folien extreme Qualitätsanforderungen gestellt. Sie betreffen z.B. die Rauhtiefe, die Dickentoleranz, die Wölbung und den thermischen Schrumpf. Diese Qualitätsanforderungen müssen über eine beträchtliche Mindestausdehnung gleichmäßig eingehalten werden. Sie soll möglichst 300 mm oder mehr in jeder Flächenrichtung betragen.

Die herkömmliche Extrusionstechnologie kann diese Qualitätsanforderungen nicht mehr erfüllen, wenn gleichzeitig gefordert wird, die Dicke der Platte oder Folie und den Kunststoff je nach Bedarf frei wählen zu können. Es sind verschiedene Methoden bekannt, um die Qualität von extrudierten Platten oder Folien zu verbessern, jedoch reichen auch diese Methoden nicht aus, um die bestehenden Anforderungen zu erfüllen.

Geglättete extrudierte Platten aus amorphen thermoplastischen Kunststoff werden gewöhnlich hergestellt, indem man die aus einer Schlitzdüse extrudierte Bahn durch ein Walzenglättwerk führt. Im Walzenspalt werden die Oberflächen der Bahn durch die Glättwalzen, die eine Temperatur unterhalb der Glasübergangstemperatur haben, schlagartig eingefroren, so daß nur das Innere der Bahn im thermoplastischen Zustand verbleibt. Ein Überschuß des thermoplastischen Kunststoffes kann daher der Fließrichtung entgegen aus dem Walzenspalt verdrängt werden und bildet vor diesem eine wulstförmige Verdickung der Bahn.

Unterschreitet die Bahn eine bestimmte Dicke, so berühren sich die eingefrorenen Schichten in der Mittelebene, so daß der Kunststoff über die ganze Dicke der Bahn nicht mehr fließfähig ist. Daher kann der Überschuß nicht aus dem Walzenspalt verdrängt werden. Infolge davon treten im Walzenspalt so hohe Druckkräfte auf, daß die Oberfläche der Glättwalzen oder deren Lager oder das Maschinengestell beschädigt werden können. Derartige Druckkräfte können durch eine verminderte Extrusionsgeschwindigkeit bzw. durch eine höhere Laufgeschwindigkeit des Glättwerks nicht ausgeschlossen werden, weil dann die Gefahr besteht, daß der Walzenspalt nicht vollständig von der Bahn ausgefüllt und die angestrebte Glättung nicht erreicht würde. Der Idealzustand eines minimalen, über die Breite der Bahn gleichmäßig dicken Wulstes vor dem Walzenspalt ist unterhalb einer bestimmten Sollstärke der Bahn kaum zu verwirklichen. Daher sind geglättete extrudierte Platten und Folien geringer Dicke mittels der herkömmlichen Glättwerkstechnologie nicht zugänglich.

Gemäß DE-A 24 32 778 werden thermoplastische Folien mit vorteilhaften Oberflächeneigenschaften, überlegener Abmessungsstabilität und annähernd isotropen Eigenschaften dadurch erzeugt, daß ein möglichst drucklos extrudierter Strang aus thermoplastischem Kunststoff sofort nach dem Austritt aus dem Extruder einer Aufnahmevorrichtung zugeführt wird, die aus zwei übereinanderliegenden, synchron angetriebenen endlosen Förderbändern besteht, zwischen denen der Strang komprimiert, ausgebreitet und flach gedrückt wird, so daß er daran haftend mitgeführt und zwischen den Förderbändern unter die Glasübergangstemperatur abgekühlt wird. Am Eintritt der Aufnahmevorrichtung werden beide Förderbänder auf einer Temperatur oberhalb der Glasübergangstemperatur des Kunststoffes gehalten und auf dem weiteren Laufweg gleichmäßig abgekühlt. Die erreichte Dickentoleranz liegt bei 0,05 bis 0,1 mm auf etwa 60 mm Breitenabstand. Eine optische Doppelbrechung mit einem Gangunterschied unter 50 nm ist nicht erreichbar. Diese Eigenschaften genügen den Toleranzansprüchen für optische Datenträger nicht.

Nach JP-A 54/017 982 (1979) werden geglättete Strangpreßfolien aus harten thermoplastischen Kunststoffen mit verbesserter Gleichmäßigkeit der Dicke erhalten, wenn das an die Extrusionsdüse angeschlossene Walzenglättwerk mittels eines Antriebssystems betrieben wird, das jegliche Laufunruhe ausschließt. Darüberhinaus ist eine sehr genaue Temperaturführung der einzelnen Glättwerkswalzen erforderlich. Das Problem der optischen Doppelbrechung läßt sich allerdings mit dieser Extrusionstechnik nicht beherrschen.

Aus der JP-A 57/014065 (1983) ist ein Extrusionsverfahren bekannt, bei dem der extrudierte Strang aus thermoplastischem Kunststoff nach dem Austritt aus der Düse auf ein endlos umlaufendes Transportband aufgelegt und abkühlen gelassen wird. Eine Glättung der freiliegenden oberen Oberfläche des Stranges ist nicht vorgesehen. Man erhält eine ebene, gut verklebbare Unterseite des Stranges.

DE-A 34 29 818 beschreibt ein Verfahren zur Extrusion von Folien aus thermoplastischen Kunststoffen mit niedriger optischer Doppelbrechung, bei dem eine Kernschicht des thermoplastischen Kunststoffes mit zwei Deckschichten aus Polyethylen oder einem anderen, nicht an der Kernschicht haftenden Kunststoff koextrudiert wird. Aus dem dreischichtigen Koextrudat erhält man eine einschichtige doppelbrechungsarme Folie, indem man die Deckschichten von der Kernschicht abzieht. Dieses Verfahren läßt eine hochwertige Glättung der Oberflächen der Kernchicht grundsätzlich nicht zu.

NL-A 86 02 018 betrifft ein Verfahren zur Herstellung einer geglätteten Platte oder Folie aus Polycarbonat durch Extrusion des Polycarbonats und Glätten der extrudierten Bahn in einem Walzenglättwerk. Die Bahnoberflächen werden in dem Walzenglättwerk gleichzeitig auf beiden Seiten unter die Glastemperatur gekühlt. Anschließend erfolgt eine biaxiale Reckung aufeine geringere Dicke. Auf diese Weise können z.B. Folien erhalten werden, die eine optische Doppelbrechung unter 50 nm und eine Oberflächenrauhigkeit unter 10 nm aufweisen. Durch das beidseitige Abkühlen und vor allem die anschließende Reckung weisen auf diese Weise hergestellte Folien oder Platten allerdings relativ hohe elastische und eingefrorene Spannungen auf. Dies führt zu einer starken Tendenz zur Wölbung und zu einem hohen Schrumpf.

Im Handel sind schon Kunststoffplatten von 1 bis 2 mm Dicke angeboten worden, die die für optische Datenträger gestellten Qualitätsanforderungen erfüllten. Es hat sich indessen erwiesen, daß es auch mit hochentwickelten bekannten Methoden der Extrusion und Glättung nicht möglich war, eine solche Qualität gleichbleibend und in reproduzierbarer Weise zu erzeugen. Es besteht daher ein starkes Bedürfnis nach Platten- und Folienmaterial der geforderten Qualität und nach einem Verfahren zu seiner sicheren Herstellung.

Aufgabe und Lösungsweg

Extrudierte Vollplatten bzw. Folien aus Kunststoff zur Herstellung optischer Datenspeicher müssen folgende Qualitätsanforderungen erfüllen:

1. Gangunterschied der optischen Doppelbrechung nicht über 50 nm beim einmaligen Durchtritt durch die Platte oder Folie (single pass)

2. Dickenschwankungen nicht über 0,1 mm bei Abmessungen bis zu 700 x 650 mm.

3. Für Platten oder Folien mit einer Dicke unter 1,0 mm: Dickenschwankungen unter 0,05 mm bei Abmessungen bis zu 700 x 650 mm.

4. Dickenschwankungen von nicht mehr als 0,04 mm, vorzugsweise nicht mehr als 0,025 mm bei Abmessungen bis zu 300 x 300 mm.

5. Maximale Rauhtiefe ($R_{max}$ nach DIN 4768) unter 300 nm auf wenigstens einer Oberfläche, und/oder eine gemittelte Rauhtiefe ($R_z$ nach DIN 4768) unter 150 nm, vorzugsweise unter 100 nm.

6. Mittenrauhwert ($R_a$ nach DIN 4768) unter 40 nm, vorzugsweise unter 25 nm.

7. Wölbung unter 1,6 mm bei Abmessungen bis zu 300 x 300 mm.

Als Wölbung wird der größte Abstand der frei liegenden Platte oder Folie von einer ebenen Unterlage bezeichnet.

8. Ein Schrumpf von nicht mehr als 16 % in Extrusionsrichtung und/oder nicht mehr als 5 % quer zur Extrusionsrichtung bei einer Lagerung bei 160 Grad C in 30 min.

Während sich die Erfüllung der Forderungen 2 bis 6 durch eine entsprechende Beschaffenheit und Ausrichtung der Glättwerkzeuge erreichen läßt, solange eine kritische Bahndicke nicht unterschritten wird, gab es für die weiteren Forderungen, insbesondere für die nach geringer Doppelbrechung keinen planmäßig beschreitbaren Lösungsweg. Alle Versuche, die Forderung nach geringer Doppelbrechung zu erfüllen, waren von vornherein dadurch eingeschränkt, daß sie die Erfüllung der anderen Forderungen nicht behindern oder ausschließen durften.

Unter dieser Vorbedingung haben sich die Erfinder die Aufgabe gestellt, die Herstellung von extrudierten Vollplatten und Folien aus Kunststoff, die hinsichtlich ihrer Oberflächenqualität die oben genannten Forderungen 2 bis 8 auch bei einer Dicke unter 1 mm erfüllen, möglich zu machen, d.h. dafür geeignete Verfahren und Vorrichtungen zu finden.

Ein weiteres Ziel der Erfindung ist die Herstellung einer extrudierten geglätteten Vollplatte bzw. Folie aus Kunststoff, die außer der erwähnten Oberflächenqualität einen Gangunterschied der optischen Doppelbrechung nicht über 50 nm (single pass) aufweist. Ein weiteres Ziel der Erfindung besteht darin, die genannten Vorteile auch mit technisch üblichen Kunststofftypen geeigneter Reinheit zu erreichen.

Die vorstehende Aufgabe wird durch das Verfahren und die Vorrichtung nach den Ansprüchen 1 bzw 15 gelöst. Eine nach dem Verfahren hergestellte Platte bzw. Folie ist in Anspruch 10 beschrieben.

Systematische Untersuchungen über die Ursache der Doppelbrechung haben zu der Erkenntnis geführt, daß der extrudierte thermoplastische Strang in der Phase des Einfrierens, d.h. bei der Abkühlung unter die Glasübergangstemperatur, extrem empfindlich gegen verformend einwirkende Kräfte ist. Anscheinend führen schon minimale verformende Kräfte zu Scherungen zwischen bereits eingefrorenen und noch schmelzflüssigen Zonen. An der Grenzfläche zwischen diesen Zonen lösen die Scherungen molekulare Orientierungen aus. Beim Durchgang des Lichtstrahls durch derartig orientierte Bereiche tritt Doppelbrechung auf.

Verformende Kräfte treten selbst dann auf, wenn der extrudierte Strang - wie beim Verfahren gemaß DE-A 24 32 778 - zwischen zwei parallel bewegten Förderbändern geführt wird und am Anfang an beiden Bändern haftet. Diese Kräfte können schon durch geringfügige Störungen des Gleichlaufs der beiden Förderbänder auftreten. Weiterhin treten bei der Abkühlung des Förderbandes mit dem daran haftenden Strang verformende Kräft auf, wenn das Band und der Strang unterschiedliche thermische Ausdehnungskoeffizienten haben. Das ist bei üblichen Förderbändern aus Stahl der Fall. Die unterschiedliche thermische Kontraktion des Förderbandes und des Kunststoffstranges hat die Wirkung einer Verformung. Außerdem ist es schwer, über die ganze Strangbreite eine völlig gleichmäßige Abkühlung zu erreichen, so daß es keine gleichförmige Kontraktion über die Strangbreite gibt. Schließlich sind auch der thermischen Dickenkontraktion durch die Bandspannung Grenzen gesetzt. Folge dieser Zwangsführung des einfrierenden Stranges ohne ausreichenden Freiheitsgrad für die Kontraktionskräfte sind Orientierungen, die unweigerlich zu Doppelbrechung führen.

Die Berücksichtigung dieser Erkenntnisse führte zu einem verbesserten Extrusions- und Glättungsverfahren, das extrudierte Vollplatten bzw. Folien aus Kunststoff mit einem Gangunterschied der optischen Doppelbrechung nicht über 50 nm (single pass) auch bei Dicken unter 1 mm zugänglich macht. Es erwies sich als möglich, auch die an die Oberflächenqualität gerichteten Forderungen 2 bis 8 gleichzeitig zu erfüllen. Als Vollplatten werden Platten ohne innere Hohlräume mit ebenen parallelen Oberflächen und einer Dicke über 0,5 mm bezeichnet; Folien unterscheiden sich davon nur durch die nicht über 0,5 mm hinausgehende Dicke und die sich daraus ergebende höhere Flexibilität.

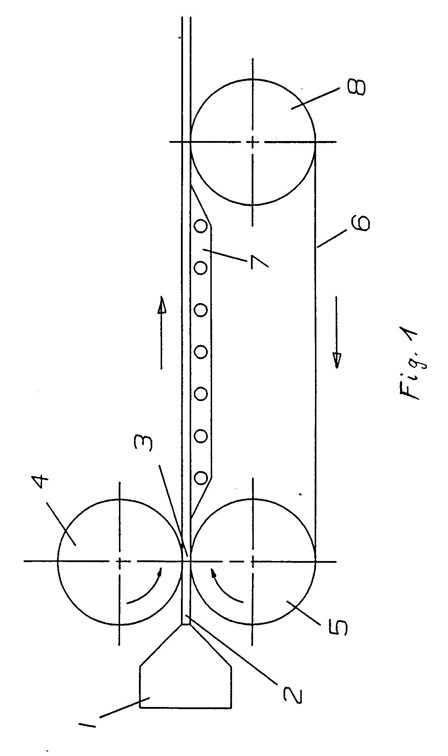

**Figur 1** zeigt in einem schematischen Schnittbild eine Extrusions- und Glättvorrichtung zur Ausführung der Erfindung.

Das Extrusionsverfahren

Das erfindungsgemäße Verfahren zur Herstellung einer extrudierten Vollplatte bzw. Folie aus Kunststoff mit geringer Doppelbrechung durch Extrusion des Kunststoffs im thermoplastischen Zustand aus einer Schlitzdüse zu einer flachen Bahn und Glätten der Oberflächen der Bahn ist dadurch gekennzeichnet, daß eine Oberfläche der Bahn bei der Glättung unter die Glasübergangstemperatur gekühlt wird, während die andere Oberfläche und der überwiegende Teil des Inneren der Bahn im thermoplastischen Zustand verbleiben. Diese Oberfläche steht in Berührung mit einem heißen Glättwerkzeug. Bei der nachfolgenden Abkühlung der Bahn unter die Glasübergangstemperatur müssen Bedingungen eingehalten werden, unter denen die auf die Oberflächen des Stranges einwirkenden verformenden Kräfte minimiert werden. Das geschieht in der Weise, daß von der extrudierten Bahn so weit wie möglich alle Kräfte ferngehalten werden, die eine verformende Wirkung auslösen und dabei zwangsläufig molekulare Orientierungen verursachen würden.

Als Kräfte, die sich nicht vollständig eliminieren lassen, sind die Schwerkraft und die Einwirkung des Luftdruckes zu nennen. Die verformende Einwirkung der Schwerkraft läßt sich dadurch minimieren, daß die Bahn während der Abkühlung auf einer waagerecht angeordneten ebenen Unterlage ruht. Die Einwirkung des Luftdruckes ließe sich zwar durch Arbeiten bei Unterdruck vermindern, was aber nicht zweckmäßig ist, weil der Luftdruck völlig gleichmäßig auf die ganze Oberfläche einwirkt, so daß davon keine verformende Kraft ausgeht, solange nicht unterschiedliche Luftdrücke auf verschiedene Oberflächenbereiche einwirken.

Auf jeden Fall müssen verformende Kräfte von der Art vermieden werden, daß die Bahn während der Abkühlung ihren Krümmungsradius verändert, beispielsweise aus einer zylindrisch gekrümmten in eine ebene Form gebracht wird. Da in der Regel eine völlig ebene Bahn angestrebt wird, muß die ebene Gestalt spätestens zu dem Zeitpunkt erreicht sein, an dem die erste Oberfläche unter die Glasübergangstemperatur abgekühlt ist und sich die andere Oberfläche noch im thermoelastischen Zustand befindet.

Zur Verringerung der einwirkenden Kräfte trägt es wesentlich bei, wenn die zuerst abgekühlte Oberfläche freiliegt, bis die Bahn unter die Glasübergangstemperatur abgekühlt ist. In der Praxis geschieht dies in der Weise, daß die Bahn nach der Kühlung der einen Oberfläche von dem Glättwerkzeug gelöst und die freiliegende Oberfläche bis zur Abkühlung der Bahn unter die Glasübergangstemperatur von verformenden Kräften freigehalten wird.

Eine besonders zweckmäßige Ausführungsform des Verfahrens ist in Figur 1 schematisch dargestellt. Aus der

EP 0 461 485 B1

Extrusionsdüse 1 tritt der extrudierte Strang 2 in den Walzenspalt 3 eines Glättwerks, das eine geglättete Oberwalze 4 und eine Unterwalze 5 enthält, wobei die Oberwalze auf einer Temperatur unterhalb der Glasübergangstemperatur und die Unterwalze auf einer Temperatur im thermoplastischen Zustandsbereich des Kunststoffes gehalten werden. Nach dem Austritt aus dem Walzenspalt wird die extrudierte Bahn auf einem um die Unterwalze laufenden endlosen geglätteten Band 6 weiterbewegt und darauf liegend unter die Glasübergangstemperatur abgekühlt.

Dadurch daß die Strangoberseite nicht durch ein obenliegendes Endlosband in ihrer Bewegung eingeschränkt wird, kann in der Zone unmittelbar hinter dem Walzenspalt ein ungehinderter Ausgleich von Orientierungen, die in und vor dem Walzenspalt entstanden sind, stattfinden. Die Zeitspanne zwischen dem Austritt der Bahn aus dem Walzenspalt und dem Eintritt in die Kühlzone soll lang genug sein, um die Relaxation von Orientierungen im thermoplastischen Zustand zuzulassen. In der anschließenden Kühlzone kann das Band frei von Krafteinwirkungen, die von einem haftenden Obertrum ausgehen, einfrieren. Zwar ist auch in diesem Fall eine isotrope Abkühlungskontraktion nicht gewährleistet, weil die Strangoberseite bereits eingefroren ist während die Unterseite noch am Stahlband haftet. Nur die Dickenkontraktion ist völlig frei. Es ist überraschend, daß trotzdem auf diese Weise die Spannungsdoppelbrechung entscheidend gesenkt werden kann.

Um eine fehlerfreie Ausbildung der extrudierten Bahn zu gewährleisten, soll die Bahn aus thermoplastischem Kunststoff mit einer solchen Geschwindigkeit aus der Extrusionsdüse gefördert werden, daß sie auf der Eingangsseite des Walzenspaltes einen Wulst bildet und an beiden Walzen bzw. an dem darauf laufenden endlosen Band über die gesamte Breite dauernd anliegt. Da ein zu großer Wulst der Entstehung von Orientierungen Vorschub leisten kann, ist die Wirkung des Wulstes umso vorteilhafter, je kleiner er ist. Es ist daher wünschenswert, die Größe des Wulstes dauernd zu überwachen und die Extrusionsgeschwindigkeit so einzustellen, daß ein gleichmäßig kleiner Wulst dauernd aufrechterhalten wird. Gemäß DE 37 30 043 kann das z.B. dadurch geschehen, daß die Formmasse mittels einer Schmelzepumpe in die Extrusionsdüse gefördert und die Förderleistung der Schmelzepumpe mit der Geschwindigkeit des Glättwerks gekoppelt wird.

Als Glättwerkzeuge wirken die obere Glättwalze 4 und das umlaufende Endlosband 6. Die Anforderungen an die erwähnten Toleranzgrenzen der Rauhtiefe, des Mittenrauhwertes und der Dickenschwankungen auf kurze Distanzen (60 mm) setzen eine entsprechende Qualität dieser Glättwerkzeuge voraus. Sie sind mit bekannten Methoden der Glätt- und Poliertechnik erreichbar. Das gleiche gilt für die gegenseitige Ausrichtung der Glättwerkzeuge. Sie hängt in bekannter Weise von der Steifigkeit der oberen Glättwalze 4 und der unteren Umlenkwalze 5, auf der das Endlosband 6 läuft, sowie von der Steifigkeit des Traggerüstes und der Qualität der Lager ab. Die Einhaltung der vorgesehenen Genauigkeit wird jedoch durch das erfindungsgemäße Verfahren in überraschender Weise erleichtert. Bei herkömmlichen Glättwerken, bei denen die den Walzenspalt bildenden Eingangswalzen auf Temperaturen unter der Glasübergangstemperatur des Kunststoffes gehalten werden, frieren die Oberflächen der extrudierten Bahn im Walzenspalt schlagartig ein. Je dünner die Bahn und je niedriger die Walzentemperatur ist, umso größer ist die Gefahr, daß sich die erstarrten Oberflächenbereiche in der Mittelebene der Bahn berühren, wodurch die Bahn ihre plastische Formbarkeit verliert. Als Folge treten extrem hohe Druckkräfte im Walzenspalt auf, die zur Durchbiegung der Walzen oder des Walzengestells, zur Beschädigung der Lager oder der polierten Walzenoberflächen führen. Sobald diese Kräfte auftreten, ist die geforderte Maßgenauigkeit der Bahn nicht mehr einzuhalten. Soweit das Glättwerk beschädigt wird, treten Maßungenauigkeiten auch dann auf, wenn die überhöhten Kräfte durch einen verbesserten Betriebspunkt nachträglich vermieden werden. Die Gefahr überhöhter Preßdrücke im Walzenspalt ist beim Verfahren der Erfindung dadurch grundsätzlich ausgeschlossen, daß die Bahn im Walzenspalt auf einer Seite im thermoplastischen Zustand verbleibt, so daß der Materialüberschuß aus dem Walzenspalt in den Wulst abgedrängt werden kann.

Aus diesem Grund muß zwar angenommen werden, daß auch beim Verfahren der Erfindung Fließvorgänge der thermoplastischen Masse im Grenzbereich zu der eingefrorenen Oberflächenschicht auftreten. Es hat sich jedoch gezeigt, daß sie nicht zu schädlichen bleibenden Orientierungen führen. Vermutlich dringt die Front des Schmelzebereiches nach dem Austritt der Bahn aus dem Walzenspalt etwas in Richtung auf die abgekühlte Oberflächenschicht vor, so daß bereits eingetretene Orientierungen weitgehend relaxieren, bevor die Bahn insgesamt unter die Glasübergangstemperatur abgekühlt wird. Die Vermeidung von Orientierungen hat mehrere vorteilhafte Auswirkungen auf die erzeugten Platten oder Folien: Als wichtigste Auswirkung ist die Verminderung der Doppelbrechung auf Werte unter 50 nm, vorzugsweise unter 20 nm (single pass) zu erwähnen. Weiterhin liegen die elastischen und eingefrorenen Spannungen so niedrig, daß die Wölbung und die thermische Schrumpfung deutlich unter den Toleranzgrenzen bleiben.

Im Walzenspalt wird die eine Oberfläche der Bahn so unter die Glasübergangstemperatur gekühlt, daß die andere Oberfläche und der überwiegende Teil des Inneren der Bahn im thermoplastischen Zustand verbleiben. Die an die abgekühlte Oberfläche angrenzende Schicht, in der die Glasübergangstemperatur unterschritten ist, soll eine ausreichende Dicke haben, damit die Oberfläche nach dem Austritt aus dem Walzenspalt durch das noch schmelzflüssige Material im Innern der Bahn nicht wieder über die Glasübergangstemperatur erwärmt wird, weil dadurch die erzielte Glättung verloren gehen könnte. Andererseits darf sie nicht so dick sein, daß sie die Hälfte der Bahndicke oder mehr ausmacht, weil sonst die Relaxation bereits aufgetretener Orientierungen nicht mehr gewährleistet wäre. Die Einstellung der optimalen Oberflächentemperatur im Walzenspalt ist an der fertigen Platte oder Folie ablesbar. Ein zu hohe Oberflächentemperatur führt zur Überschreitung der Toleranzgrenzen der Rauhigkeitswerte und der Dickengenauigkeit, eine zu niedrige Oberflächentemperatur zum Anstieg von Doppelbrechung, Schrumpf und Wölbung.

Für die Einstellung der Oberflächentemperaturen der Bahn im Walzenspalt sind die Temperaturen der Walzen 4 und 5 von ausschlaggebender Bedeutung. Die Oberflächentemperatur T der Bahn errechnet sich aus der Temperatur $T_s$ und der Wärmeeindringfähigkeit $b_s$ der Schmelze und aus der Temperatur $T_w$ und der Wärmeeindringfähigkeit $b_w$ des Walzen- bzw. Bandwerkstoffes nach der Formel

$$T = (T_s.b_s + T_w.b_w) / (b_s + b_w)$$

Darin sind $T_s$ die Schmelzetemperatur und $T_w$ die Walzentemperatur jeweils vor dem Walzenspalt. Da die zweite Oberfläche der Bahn im thermoplastischen Zustand verbleiben soll, ist es zweckmäßig, die Umlenkwalze 5 und das darauf laufende Band 6 etwa bei der Schmelzetemperatur zu halten. Jedenfalls muß die Temperatur im thermoplastischen Bereich des Kunststoffs liegen. Die Einstellung und Überwachung der Walzentemperaturen erfolgt mit bekannten technischen Mitteln.

Bei der Verarbeitung von Bisphenol-A-Polycarbonat und anderen Kunststoffen von vergleichbaren Verarbeitungseigenschaften wird beispielsweise die Oberwalze auf einer Temperatur im Bereich von 60 bis 140°C und die Unterwalze bzw. das darauf laufende Endlosband auf einer Temperatur im Bereich von 160 bis 300°C gehalten.

Nach dem Austritt aus dem Walzenspalt, gegebenenfalls nach Durchlaufen einer heißen Relaxationszone, tritt das Endlosband mit der darauf liegenden Bahn in die Kühlzone ein, wo das Band 6 über die Kühlplatte 7 hinweggleitet. Diese soll eine ebene Oberfläche haben, damit keine Verformungen in der abkühlenden Bahn auftreten. Man läßt zweckmäßig ein Kühlmittel im Gegenstrom zum Band 6 durch die Kühlplatte 7 fließen, so daß sie an ihrem vom Glättwerk entfernten Ende die niedrigste Temperatur hat. Die Bahn soll dort über die ganze Dicke eine Temperatur unterhalb der Glasübergangstemperatur erreicht haben. Während der Abkühlung friert die Unterseite der Bahn im geglätteten Zustand ein und löst sich dabei selbsttätig von dem Band. Das Endlosband wird an der hinteren Umlenkrolle 8 zum Glättwerk zurückgeführt, während die fertige extrudierte und geglättete Bahn das Band verläßt. Sie kann wahlweise gerollt oder zu Abschnitten gewünschter Länge geschnitten werden.

Der thermoplastische Kunststoff

wird nach den Erfordernissen der Anwendung der erzeugten Platten und Folien ausgewählt. Der Kunststoff soll möglichst amorph sein, d.h. beim Abkühlen aus der Schmelze keine kristallinen Bereiche ausbilden. Seine Glasübergangstemperatur sollte deutlich über Raumtemperatur, beispielsweise über 50°C, vorzugsweise bei 80 bis 160°C liegen.

Für die Herstellung optischer Datenträger werden glasklare, harte Kunststoffe von hoher Reinheit bevorzugt, insbesondere Polymethacrylat- und Polycarbonatkunststoffe. Die Erfindung gestattet es, das Problem der optischen Doppelbrechung weitgehend auszuschließen, so daß die erzeugten Platten und Folien als optische Datenträger einsetzbar sind. Das gelingt umso leichter, je niedriger die Anisotropie der Polarisierbarkeit der Monomerbausteine ist, die dem Kunststoff zugrundeliegt; vgl. J. Hennig, Colloid & Polymer Sci. 259 (1981), S.80-86. Wegen der vielfältigen Forderungen, die an Kunststoffe für optische Datenträger gestellt werden, ist es in der Regel nicht möglich, die Anisotropie der Polarisierbarkeit zum entscheidenden Gesichtspunkt der Kunststoffauswahl zu machen. Ein besonders wichtiger Vorteil der Erfindung liegt deshalb darin, daß sie die erforderliche Verminderung der optischen Doppelbrechung auch dann ermöglicht, wenn die Anisotropie der dem Kunststoff zugrundeliegenden Monomerbausteine hoch ist.

Die Neigung zur Ausbildung von Doppelbrechung nimmt mit steigender Anisotropie der Polymerbausteine und steigender Orientierung zu. Eine halbquantitative Meßgröße für die Neigung eines Polymeren zu optischer Doppelbrechung ist nach J.Hennig (Proc.Int.Symp.on Optical Memory, 1987/Japanese Journal of Applied Physics, Vol.26,1987, Supplement 26-4, Seiten 9-14) in der Doppelbrechung von einachsig orientierten Polymeren zu erkennen. Hennig gibt folgende Bewertungen an:

| Polymethylmethacrylat | - |
| Polyacrylnitril | - |
| Polyvinylchlorid | + |
| Polyvinylidenfluorid | + |
| Polymethylpenten | + |
| Polystyrol | -- |
| Polyvinylcarbazol | -- |
| Bisphenol-A-polycarbonat | ++ |
| Polyethylenterephthalat | ++ |
| aromat.Polyethersulfon | ++ |
| Polybutadien | ++ |

Das Zeichen - und + geben die Richtung, die Zahl der Zeichen die Größe der beobachteten Doppelbrechung an. Da positive und negative Doppelbrechung die gleichen Nachteile hervorrufen, verdient hier nur die Größe der Doppelbrechung Beachtung. Es zeigt sich, daS aromatische und ethylenisch ungesättigte Polymerbausteine einen starken Einfluß auf die Doppelbrechung ausüben. Eine genauere quantitative Erfassung ist durch den Quotienten aus beobachteter Doppelbrechung (delta-n) und gemessener Orientierungsfunktion ($F_{or}$) sowie durch die Anisotropie der Grundpolarisierbarkeit des Monomerbausteins ($p_1$-$p_2$) möglich. Hennig gibt für diese Größen die Werte

| Polymer | (delta-n)/$F_{or}$ | $p_1$-$p_2$ (cm$^3$) |
| --- | --- | --- |
| Polymethylmethacrylat | $-1,5 \times 10^{-3}$ | $-0,25 \times 10^{-25}$ |
| Polyvinylchlorid | $+3,6 \times 10^{-3}$ | $+0,31 \times 10^{-25}$ |
| Polystyrol | $-63 \times 10^{-3}$ | $-12 \times 10^{-25}$ |
| Bisphenol-A-polycarbonat | $+23 \times 10^{-3}$ | -- |

an. Die Anwendung der Erfindung ist dann besonders vorteilhaft, wenn für die verwendeten Kunststoffe bzw. deren Polymerbausteine die Absolutbeträge der Größen

$$(delta\text{-}n)/F_{or} > \pm 10 \times 10^{-3}$$

$$(p_1\text{-}p_2) > \pm 1 \times 10^{-25} \, cm^3$$

sind. Aus anwendungstechnischer Sicht sind Polymethylmethacrylat und Polycarbonate, insbesondere Bisphenol-A-polycarbonat, die meist bevorzugten Polymeren. Das letztere hat wegen seiner hohen Doppelbrechungsneigung die höchste Bedeutung für die Anwendung der Erfindung. Als weitere geeignete Kunststoffe sind Polystyrol und Polyarylate (Poly-bisphenol-A-terephthalat) zu nennen.

Die extrudierte Platte oder Folie

Die Erfindung läßt die Herstellung von Bahnen von mehr als 300 mm Breite, beispielsweise bis zu 2000 mm Breite zu. Daraus lassen sich Abschnitte mit einer Mindestweite von wenigstens 300 mm in jeder Flächenrichtung herstellen. Bei einer Dicke von 0,4 bis 2 mm lassen sich daraus kreisrunde optische Datenträger-Platten bzw. -Plattenhälften im Standard-Durchmesser von 300 mm erzeugen. Bei größeren Produktionsbreiten lassen sich Platten erzeugen, die bei Abmessungen bis zu 700 x 650 mm Dickenschwankungen von 0,1 mm, bezogen auf den Sollwert, nicht überschreiten. Auch die noch strengere Anforderung einer Dickenschwankung unter 0,05 mm bei einer Dicke unter 1 mm ist bei gleichen Flächenabmessungen erreichbar. Während diese Dickengenauigkeit Voraussetzung für die Weiterverarbeitung zu informationstragenden Datenspeicherplatten ist, erfordert deren optische Ablesbarkeit eine noch engere Toleranzgrenze der Dickenschwankung von höchstens 0,04 mm, vorzugsweise 0,025 mm über eine Distanz von 60 mm in jeder Richtung der Plattenfläche.

Für einseitig ablesbare Datenträger sind Platten aus Polycarbonatkunststoff mit einer Dicke von 0,5 bis 2 mm ein besonders bevorzugtes Material. Die Erfindung gestattet es, für diesen Zweck geeignete Polycarbonat-Platten mit der erforderlichen Oberflächenqualität und hinreichend niedriger optischer Doppelbrechung herzustellen.

**Patentansprüche**

1.  Verfahren zur Herstellung einer geglätteten extrudierten Vollplatte bzw. Folie aus thermoplastischem Kunststoff mit einer Glasübergangstemperatur über 50°C durch Extrusion des Kunststoffs im thermoplastischen Zustand aus einer Schlitzdüse zu einer flachen Bahn und Glätten der Oberflächen der Bahn,
    dadurch gekennzeichnet,
    daß während der Glättung beider Oberflächen die eine Oberfläche der Bahn unter die Glasübergangstemperatur gekühlt wird, während die andere Oberfläche und der überwiegende Teil des Inneren der Bahn im thermoplastischen Zustand verbleiben, und daß die Bahn unter Bedingungen, unter denen die auf die Oberflächen des Stranges einwirkenden verformenden Kräfte minimiert werden, unter die Glasübergangstemperatur abgekühlt wird.

2.  Verfahren nach Anspruch 1, dadurch gekennzeichnet, daß die geglättete Bahn eine Dicke unter 1 mm, vorzugsweise unter 0,5 mm hat.

3.  Verfahren nach Anspruch 1 oder 2, dadurch gekennzeichnet, daß ein thermoplastischer Kunststoff mit einem Quotienten aus beobachteter Doppelbrechung (delta-n) und gemessener Orientierungsfunktion ($F_{or}$) von mehr als ±10 x $10^{-3}$ extrudiert wird.

4.  Verfahren nach einem oder mehreren der Ansprüche 1 bis 3, dadurch gekennzeichnet, daß die Oberflächen der Bahn mittels zweier Glättwerkzeuge geglättet werden, von denen das eine eine Oberflächentemperatur unter der Glasübergangstemperatur und das andere eine Oberflächentemperatur im thermoplastischen Zustandsbereich des thermoplastischen Kunststoffes haben.

5.  Verfahren nach Anspruch 4, dadurch gekennzeichnet, daß die Bahn nach der Kühlung der einen Oberfläche unter die Glasübergangstemperatur von dem Glättwerkzeug gelöst und die freiliegende Oberfläche bis zur Abkühlung der Bahn unter die Glasübergangstemperatur von verformenden Kräften freigehalten wird.

6.  Verfahren nach einem oder mehreren der Ansprüche 1 bis 5, dadurch gekennzeichnet, daß der extrudierte Strang in den Walzenspalt eines Glättwerks, das eine geglättete Oberwalze und eine Unterwalze enthält, eingeführt wird und daß die Oberwalze auf einer Temperatur unterhalb der Glasübergangstemperatur und die Unterwalze auf einer Temperatur im plastischen Zustandsbereich des Polycarbonatkunststoffes gehalten werden und daß die extrudierte Bahn nach dem Austritt aus dem Walzenspalt auf einem um die Unterwalze laufenden endlosen geglätteten Band weiterbewegt und unter die Glasübergangstemperatur abgekühlt wird.

7.  Verfahren nach Anspruch 6, dadurch gekennzeichnet, daß die Bahn aus thermoplastischem Kunststoff mit einer solchen Geschwindigkeit aus der Extrusionsdüse gefördert wird, daß die Bahn auf der Eingangsseite des Walzenspaltes einen Wulst bildet und an beiden Walzen über die gesamte Breite dauernd anliegt.

8.  Verfahren nach einem oder mehreren der Ansprüche 1 bis 7, dadurch gekennzeichnet, daß als thermoplastischer Kunststoff ein Polykarbonat-Kunststoff verwendet wird.

9.  Verfahren nach einem oder mehreren der Ansprüche 1 bis 8, dadurch gekennzeichnet, daß die Oberwalze auf einer Temperatur im Bereich von 60 bis 140°C und die Unterwalze bzw. das darauf laufende Endlosband auf einer Temperatur im Bereich von 160 bis 300°C gehalten werden.

10. Extrudierte Vollplatte oder Folie aus einem thermoplastischen Kunststoff, der bei Orientierung optische Doppelbrechung ausbildet, mit einer Glasübergangstemperatur über 50°C und einer Dicke von mindestens 1 mm, gekennzeichnet durch einen Gangunterschied der optischen Doppelbrechung nicht über 50 nm (single pass) einen Schrumpf von nicht mehr als 16 % in Extrusionsrichtung und/oder nicht mehr als 5 % quer zur Extrusionsrichtung bei einer Lagerung bei 160 Grad C in 30 min, sowie eines oder mehrere der folgenden Merkmale:

    a) Dickenschwankung nicht über 0,1 mm bei Abmessungen bis zu 700 x 650 mm.
    b) Dickenschwankung nicht über 0,04 mm, vorzugsweise nicht über 0,025 mm bei Abmessungen bis zu 300 x 300 mm.

c) Maximale Rauhtiefe unter 300 nm auf wenigstens einer Oberfläche, und/oder eine gemittelte Rauhtiefe unter 150 nm, vorzugsweise unter 100 nm.

d) Mittenrauhwert unter 40 nm, vorzugsweise unter 25,4 nm.

e) Wölbung unter 1,6 mm bei Abmessungen bis zu 300 x 300 mm.

11. Platte oder Folie nach Anspruch 10, gekennzeichnet durch eine Mindestweite von wenigstens 300 mm in jeder Flächenrichtung.

12. Platte oder Folie nach Anspruch 10 oder 11, dadurch gekennzeichnet, daß sie aus Polykarbonat-Kunststoff besteht.

13. Platte oder Folie nach einem oder mehreren der Ansprüche 10 bis 12, dadurch gekennzeichnet, daß sie aus Bisphenol-A-Polykarbonat-Kunststoff besteht.

14. Verwendung der Platten bzw. Folien nach einem oder mehreren der Ansprüche 10 bis 13 zur Herstellung von optisch lesbaren Datenspeichern.

15. Vorrichtung zur Herstellung von geglätteten extrudierten Vollplatten bzw. Folien aus thermoplastischem Kunststoff, enthaltend eine von einem Extruder gespeiste Schlitzdüse (1) zur Ausbildung eines flachen extrudierten Stranges (2) und ein den Strang aufnehmendes, wenigstens eine geglättete Oberwalze (4) und eine Unterwalze (5) aufweisendes Glättwerk, worin der flache Strang (2) im Walzenspalt (3) zwischen der Ober- und der Unterwalze geglättet wird, dadurch gekennzeichnet, daß die Oberwalze (4) kühlbar ist, daß die Unterwalze (5) auf eine Temperatur im thermoplastischen Zustandsbereich des Kunststoffes heizbar ist und daß um die Unterwalze ein endloses geglättetes Band (6) läuft, das über eine ebene Kühlplatte (7) geführt wird und über eine Umlenkwalze (8) zur Unterwalze (5) zurückläuft.

## Claims

1. A process for the manufacture of a smoothened extruded plain sheet or foil made from thermoplastic synthetic material with a glass transition temperature higher than 50° C, by extrusion of the synthetic material in a thermoplastic state from a slit nozzle into a flat strip, with subsequent smoothing of the strip, characterised in that during the smoothing process of both surfaces, one of the surfaces is cooled under the glass transition temperature whilst the other surface and the interior of the strip remain in a thermoplastic state, and that the strip is cooled under the glass transition temperature under conditions whereby deforming forces which act on the surface of the strand are minimised.

2. A process according to claim 1, characterised in that the smoothened strip has a thickness of less than 1 mm, preferably less than 0.5 mm.

3. Process according to claim 1 or 2, characterised in that a thermoplastic synthetic material is extruded with a quotient of observed double refraction (delta-n) and measured orientation function ($F_{or}$) of more than $\pm 10 \times 10^{-3}$.

4. A process according to one or more of claims 1 to 3, characterised in that the surfaces of the strip are smoothened by means of two smoothing tools, of which one tool has a temperature below the glass transition temperature and the other has a temperature in the thermoplastic state range of the thermoplastic synthetic material.

5. A process according to claim 4, characterised in that the one surface of the strip which is below the glass transition temperature is freed from the smoothing tool, and the exposed surface is kept free of deforming forces until the strip is cooled to below the glass transition temperature.

6. A process according to one or more of claims 1 to 5, characterised in that the extruded strand is fed into the roller gap of a smoothing apparatus comprising a smoothened upper roller and a lower roller, and wherein the upper roller is kept at a temperature below the glass transition temperature and the lower roller is kept at a temperature in the thermoplastic range of the polycarbonate synthetic material, and that the extruded strip is moved on after leaving the roller gap by means of a smoothened endless belt running around the lower roller and is cooled to below the glass transition temperature.

7. A process according to claim 6, characterised in that the thermoplastic synthetic strip is ejected from the extrusion nozzle at such a speed as to generate a bulge at the input side of the roller gap which is continually present at both rollers across the entire width.

8. A process according to one or more of claims 1 to 7, characterised in that a polycarbonate synthetic material is used as a thermoplastic synthetic material.

9. A process according to one or more of claims 1 to 8, characterised in that the upper roller is kept at a temperature in the range of 60° C to 140° C and that the lower roller, and the endless belt which runs over it, is kept at a temperature in the range of 160° C to 300° C.

10. An extruded plain sheet or foil made from a thermoplastic synthetic material which shows optical double refraction with orientation and has a glass transition temperature higher than 50° C and a thickness of at least 1 mm, characterised in that it features a path difference in the optical double refraction of not more than 50 nm (single pass), shrinkage of no more than 16% in the direction of extrusion and/or no more than 5% in a direction perpendicular to the direction of extrusion on storage at a temperature of 160° C over a period of 30 minutes, and also one or more of the following features:

   a) thickness fluctuation of no more than 0.1 mm for dimensions of up to 700 x 650 mm.
   b) thickness fluctuation of no more than 0.04 mm, preferably no more than 0.025 mm, for dimensions of up to 300 x 300 mm.
   c) maximum peak-to-valley height of below 300 nm on at least one surface, and/or a measured peak-to-valley height of below 150 nm, preferably below 100 nm.
   d) mean roughness value of below 40 nm, preferably below 25.4 nm.
   e) bulging of below 1.6 mm for dimensions of up to 300 x 300 mm.

11. A sheet or foil according to claim 10, characterised in that it has a minimum width of at least 300 mm in all directions.

12. A sheet or foil according to claim 10 or 11, characterised in that it is made from polycarbonate synthetic material.

13. A sheet or foil according to one or more of claims 10 to 12, characterised in that it is made from bisphenol-A-polycarbonate synthetic material.

14. Use of sheets or foils according to one or more of claims 10 to 13 for the manufacture of optically-readable data storage media.

15. An apparatus for the manufacture of smoothened extruded plain sheets or foils made from thermoplastic synthetic material, comprising a slit nozzle (1) fed from an extruder which forms a flat extruded strand (2), a smoothing apparatus which has at least one smoothened upper roller (4) and a lower roller (5) which accept the strand, wherein the flat strand (2) is smoothened in the roller gap (3) between the upper and the lower rollers, characterised in that the upper roller (4) can be cooled, that the lower roller (5) can be heated to a temperature which is within the thermoplastic range of the synthetic material and that a smoothened endless belt (6) runs over the lower roller, which is conveyed over a cooling plate (7) and returns to the lower roller (5) via an idler roller (8).

## Revendications

1. Procédé de fabrication d'une plaque pleine d'une feuille, extrudée, lissée, en matière plastique thermoplastique ayant une température de transition vitreuse supérieure à 50°C, obtenue par extrusion de la matière à l'état thermoplastique par buse à fente pour former une bande plate dont la surface est lissée,
   caractérisé en ce que

   - pendant le lissage des deux surfaces, l'une des surfaces de la bande est refroidie en dessous de la température de transition vitreuse, alors que l'autre surface et la partie principale du coeur de la bande restent à l'état thermoplastique, et
   - on refroidit la bande dans des conditions telles que les efforts de déformation qui agissent sur la surface de la nappe, sont réduites au minimum pour passer en dessous de la température de transition vitreuse.

2. Procédé selon la revendication 1,
   caractérisé en ce que

la bande lissée a une épaisseur de 1 mm, de préférence inférieure à 0,5 mm.

3. Procédé selon la revendication 1 ou 2,
caractérisé en ce qu'
on extrude une matière thermoplastique ayant un rapport entre la double réfraction observée (delta-n) et la fonction d'orientation mesurée ($F_{or}$) supérieure à ± 10 x 10$^{-3}$.

4. Procédé selon l'une ou plusieurs des revendications 1 à 3,
caractérisé en ce que
la surface de la bande est lissée à l'aide de deux outils de lissage dont l'un a une température de surface inférieure à la température de transition vitreuse et l'autre, une température de surface correspondant à la plage thermoplastique de la matière thermoplastique.

5. Procédé selon la revendication 4,
caractérisé en ce qu'
après refroidissement de l'une des surfaces en dessous de la température de transition vitreuse, la bande est détachée de l'outil de lissage et la surface libre est dégagée de tout effort de déformation jusqu'au refroidissement de la bande en dessous de la température de transition vitreuse.

6. Procédé selon l'une ou plusieurs des revendications 1 à 5,
caractérisé en ce que

- le cordon extrudé passe dans l'intervalle des cylindres d'un mécanisme de lissage composé d'un cylindre supérieur et d'un cylindre inférieur de lissage, et
- le cylindre supérieur est maintenu à une température inférieure à la température de transition vitreuse et le cylindre inférieure a une température de la plage plastique du polycarbonate et la bande extrudée, après sortie de l'intervalle des cylindres, est déplacée sur une bande sans fin passant autour du cylindre inférieur, cette bande étant lissée, et elle est refroidie en dessous de la température de transition vitreuse.

7. Procédé selon la revendication 6,
caractérisé en ce que
la bande de matière thermoplastique est transférée à une vitesse telle, par la buse d'extrusion, que la bande forme, du côté de l'entrée de l'intervalle des cylindres, un bourrelet et s'applique en permanence sur toute la largeur contre les deux cylindres.

8. Procédé selon l'une ou plusieurs des revendications 1 à 7,
caractérisé en ce que
la matière thermoplastique est un polycarbonate.

9. Procédé selon l'une ou plusieurs des revendications 1 à 8,
caractérisé en ce que
le cylindre supérieur est maintenu à une température de l'ordre de 60°C à 140°C et le cylindre inférieur ou la bande sans fin qui passe sur celui-ci sont maintenus à une température de 160°C à 300°C.

10. Plaque pleine ou feuille extrudées en matière thermoplastique développant une double réfraction optique avec orientation, ayant une température de transition vitreuse supérieure à 50°C et une épaisseur d'au moins 1 mm, caractérisée par

- une différence de marche pour la double réfraction optique qui ne dépasse pas 50 nm (passage simple), une rétraction qui ne dépasse pas 16 % dans la direction d'extrusion et/ou qui ne dépasse pas 5 % dans la direction transversale à la direction d'extrusion pour un stockage à 160°C pendant 30 min. ainsi qu'une ou plusieurs caractéristiques suivantes :

  a) variation d'épaisseur qui ne dépasse pas 0,1 mm pour des dimensions de 700 x 650 mm,
  b) variation d'épaisseur ne dépassant pas 0,04 mm, de préférence ne dépassant pas 0,025 mm pour des dimensions de 300 x 300 mm,
  c) profondeur de rugosité maximale inférieure à 300 nm sur au moins une face et/ou une profondeur de rugosité moyenne inférieure à 150 nm et, de préférence, inférieure à 100 nm,
  d) rugosité moyenne inférieure à 40 nm, de préférence inférieure à 25,4 nm,

e) cintrage inférieur à 1,6 mm pour des dimensions de 300 x 300 mm.

11. Plaque ou feuille selon la revendication 10,
    caractérisée par
    une dimension minimale au moins égale à 300 mm dans chaque direction de la surface.

12. Plaque ou feuille selon la revendication 10 ou 11,
    caractérisée en ce qu'
    elle est en polycarbonate.

13. Plaque ou feuille selon l'une ou plusieurs des revendications 10 à 12,
    caractérisée en ce qu'
    elle est en bisphénol-A-polycarbonate.

14. Application de plaques ou de feuilles selon l'une ou plusieurs des revendications 10 à 13, pour la fabrication de mémoires de données à lecture optique.

15. Dispositif pour la fabrications de plaques pleines ou de feuilles extrudées, lissées, en matière thermoplastique, comprenant une buse à fente (11) alimentée par une extrudeuse pour former un cordon (2) extrudé plat et un mécanisme de lissage formé d'au moins un cylindre supérieur (4) et d'un cylindre inférieur (5), lissés, recevant le cordon, le cordon plat (2) étant lissé dans l'intervalle (3) entre le cylindre supérieur et le cylindre inférieur, caractérisé en ce que

    - le cylindre supérieur (4) peut être refroidi,
    - le cylindre inférieur (5) est chauffé à une température située dans la plaque thermoplastique de la matière plastique, et
    - une bande lissée (6) sans fin passe autour du cylindre inférieur, cette bande étant guidée sur une plaque de refroidissement (7), plane, et revenant par-dessus un cylindre de renvoi (8) vers le cylindre inférieur (5).

Fig. 1